# EUROPEAN PATENT SPECIFICATION

(11) **EP 3 165 458 B1**
(45) Date of publication and mention of the grant of the patent: **20.03.2019**
(21) Application number: 14896445.5
(22) Date of filing: 03.07.2014
(51) Int. Cl.: B64D 11/02, B64D 11/04, E03C 1/084

(54) **FAUCET FOR WATER SUPPLY UNIT FOR AIRCRAFT**
HAHN FÜR WASSERVERSORGUNGSEINHEIT FÜR EIN FLUGZEUG
ROBINET POUR UNE UNITE D'ALIMENTATION EN EAU D'UN AERONEF

(43) Date of publication of application: 10.05.2017
(73) Proprietor: JAMCO CORPORATION, Mitaka-shi, Tokyo 181-8571 (JP)
(72) Inventor: OGURI, Tsuyoshi, Mitaka-shi, Tokyo 181-8571 (JP); TERADA, Mineaki, Mitaka-shi, Tokyo 181-8571 (JP)
(74) Representative: Novaimo
(86) International application number: PCT/JP2014/067759
(87) International publication number: WO 2016/002038

(56) References cited:
- EP-A1- 1 273 724
- CN-A- 102 535 587
- JP-A- H03 275 821
- JP-A- 2002 102 100
- JP-A- 2003 106 662
- JP-U- 3 020 942
- JP-U- H0 465 858
- JP-U- H0 465 858
- JP-U- H0 624 067
- JP-U- H0 624 067
- US-A- 2 811 340
- US-A1- 2013 015 268

## Description

### [Technical Field]

The present invention relates to a faucet, or water tap, used in a water supply unit provided in a lavatory, or washroom, a galley, or kitchen, and so on mounted on a passenger aircraft.

### [Background Art]

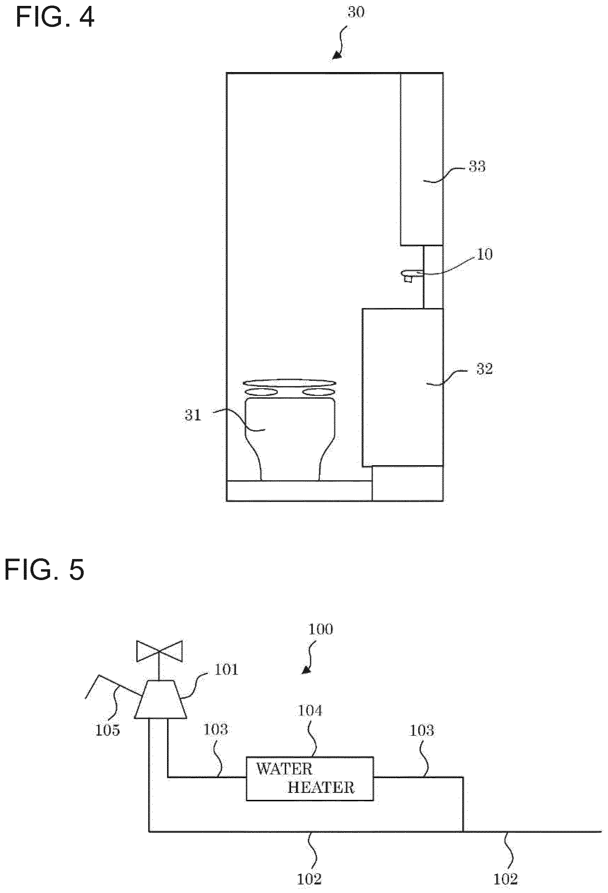

A water supply unit 100 provided in a lavatory for an aircraft mounted on a passenger aircraft includes, for example as illustrated in FIG. 5, a water supply line 102 connected to a hydrant 101, a hot water supply line 103 diverged from the water supply line 102 and connected to the hydrant 101, a water heater 104 arranged in midway of the hot water supply line 103, and a faucet 105 mounted to the hydrant 101.

In general, a plurality of facilities that use water, such as lavatories and galleys, are provided in a passenger aircraft.

However, once water and oil are supplied to the passenger aircraft at an airport, water will not be supplied to the aircraft until the aircraft reaches the airport of the destination, so that the water stored in a tank with a limited capacity is required to be consumed efficiently.

On the other hand, one known measure for saving the amount of discharged water is a method of attaching a water saving piece having a bubble forming implement and two layers of orifice members arranged upstream of the bubble forming implement built into a casing to a water tap of water supplied to households (refer for example to Patent Literature 1).

### [Citation List]

### [Patent Literature]

[PTL 1] Japanese Unexamined Patent Application Publication No. 2004-132138

### [Summary of Invention]

### [Technical Problem]

It is disclosed in Patent Literature 1 that a water tap adopting the water saving piece of Patent Literature 1 realizes a high water saving effect and enables to form bubbles stably even in a flow rate of 5 L/min, by selecting an appropriate combination of the shapes of the orifice members arranged in two layers within the casing.

However, in a water supply unit of an aircraft, there is only a limited space for arranging a pump for supplying water, so that it is difficult to use a large-scale pump with a high discharge ability, and as a result, water is supplied within a range (such as 1 L/min) smaller than the flow rate of tap water supplied to normal households.

Therefore, not enough supply of water can be acquired by merely attaching the water saving piece taught in Patent Literature 1 is merely attached to the faucet of the water supply system of an aircraft, so that there was a drawback that it was not possible to realize both usability of the water discharged through the faucet and water saving effect.

Document US 2 811 340 discloses a fluid mixing device for mixing a liquid under pressure with atmospheric air.

Therefore, the object of the present invention is to provide a faucet capable of discharging water having necessary water pressure and achieving a water saving effect at the same time, even if the flow rate of water is within a small range as in the case of water supplied in an aircraft.

### [Solution to Problem]

In order to solve the problems described above, the present invention provides a faucet for a water supply system for an aircraft according to claim 1.

Further, the adapter includes a metal cap member having a plurality of holes on a side of the casing opposite from a side mounted to the body portion.

The adapter can further include a strainer on a side of the casing mounted to the body portion.

Further, the faucet for a water supply unit for an aircraft can be applied to a lavatory unit for an aircraft or a galley for an aircraft.

### [Advantageous Effects of Invention]

It becomes possible to discharge water with a necessary water pressure and achieve a water saving effect even in a water with a flow rate of a small range, as in the water supplied within an aircraft, by adopting the faucet for a water supply system for an aircraft according to the present invention.

Further, since the total amount of water, that is, the capacity of a tank, loaded on the aircraft can be reduced by achieving the above-described water saving effect, effects such as the reduction of weight of the airframe of the passenger aircraft in operation, the contribution to improvement of fuel efficiency, and the increase of number of passenger seats and increase of load can be exerted.

### [Brief Description of Drawings]

FIG. 1 is a view illustrating a configuration of a faucet of a water supply system of an aircraft according to the present invention.
FIG. 2 is a view illustrating an internal configuration of an adapter 12 illustrated in FIG. 1.
FIG. 3 is a graph illustrating a water saving effect by using a faucet 10 according to the present invention.
FIG. 4 is a front view illustrating a specific example having applied the faucet 10 according to the present invention to a lavatory unit for an aircraft.
FIG. 5 is a schematic view illustrating one example of a water supply unit adopted in a lavatory for an aircraft disposed in a passenger aircraft.

### [Description of Embodiments]

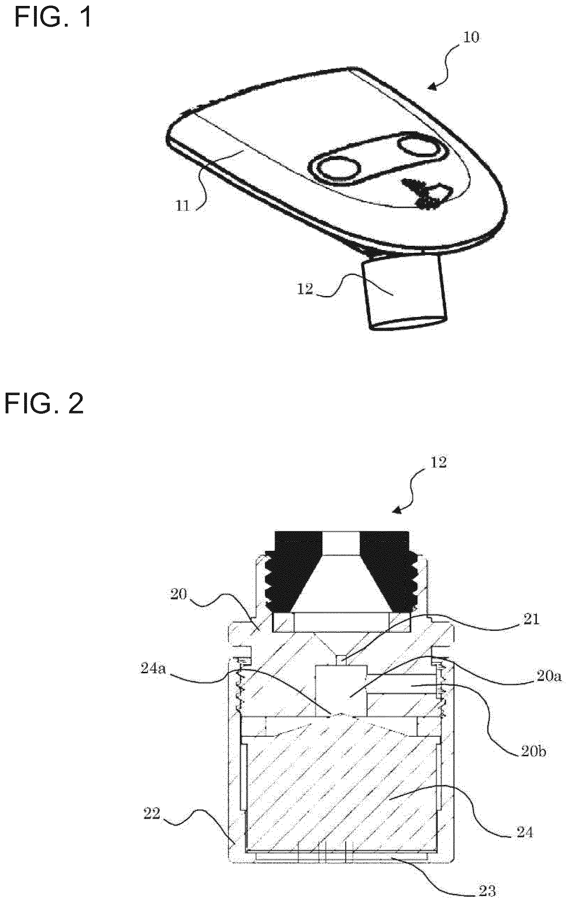

FIG. 1 illustrates a configuration of a faucet for a water supply unit for an aircraft according to the present invention.

A faucet 10 is composed of a body portion 11, and an adapter 12 mounted to a discharge portion of the body portion 11.

The body portion 11 is mounted to a washbasin of a lavatory or a sink of a galley provided in an aircraft, and a water passage is formed within the body portion 11 and connected to a hydrant.

FIG. 2 is a view illustrating an inner structure of the adapter 12 illustrated in FIG. 1.

The adapter 12 adopts a structure where a mounting member 20 for mounting to the faucet 10 and an adapter body portion 22 are screw-engaged to form a casing, and an orifice 21 is formed at a center portion of the mounting member 20.

Now, as illustrated in FIG. 2, a portion upstream of the orifice 21 in the mounting member 20 is designed to have a diameter gradually narrowed down from an opening. Such shape facilitates the processing of the mounting member 20.

The shape of the portion upstream of the orifice 21 is not restricted to a shape having a gradually narrowing diameter, and can adopt other shapes such as a stepped shape.

Further, the mounting member 20 includes a negative pressure forming chamber 20a communicated with the orifice 21, and an air passage hole 20b communicated from the negative pressure forming chamber 20a to an exterior of the mounting member 20.

Now, as illustrated in FIG. 2, an opening diameter of the negative pressure forming chamber 20a is formed greater than an opening diameter of the orifice 21.

Further, a partially cut-out clearance is formed at a screw-engaged portion between the mounting member 20 and the adapter body portion 22, and the negative pressure forming chamber 20a adopts a structure to take in outer air through the air passage hole 20b by connecting the clearance with the air passage hole 20b.

On the other hand, the adapter body portion 22 has, in the interior thereof, a metal cap member 23 having a plurality of holes through which water mixed with air is discharged, and a dispersion member 24 that diverges water having passed through the negative pressure forming chamber 20a into a plurality of water flows and then merges the diverged water flows.

The dispersion member 24 adopts a configuration where a substantially conical projection 24a is formed at a center portion of one surface, and having a plurality of dispersed holes formed in a circumference of the projection 24a.

According to the above-described configuration of the dispersion member 24, the water having passed through the negative pressure forming chamber 20a of the mounting member 20 is dispersed through the projection 24a from the center portion toward the outer circumferential direction, and the water having passed through the dispersed holes is diverged into a plurality of water flows, before the plurality of diverged flows are merged again.

It is preferable to arrange a seal packing respectively between the mounting member 20 and the adapter body portion 22, and between the adapter body portion 22 and the metal cap member 23 or the dispersion member 24 received within the adapter body portion 22.

Further, it is possible to provide a strainer on an upstream side of the orifice 21 formed on the mounting member 20.

This configuration enables to prevent leakage of water from the adapter 12, and also prevent foreign substances within the water from entering the adapter 12.

According to the adapter 12 configured as above, the water flowing in from the body portion 11 of the faucet 10 passes through the orifice 21 and enters the negative pressure forming chamber 20a, and the water is mixed with the air flowing in through a communication hole 20b within the negative pressure forming chamber 20a. At this time, the negative pressure forming chamber 20a is set to negative pressure, so that the water will not flow out to the exterior through the communication hole 20b.

The water flow of water mixed with air having passed through the negative pressure forming chamber 20a is passed through the dispersed holes of the dispersion member 24, diverged into multiple water flows, and then merged again, according to which the air-mixed water flow is further stirred and mixed, before the water finally passes through the metal cap member 23 and discharged as multiple shower flows through the adapter 12.

Now, by optimizing diameters or arrangements of discharge holes formed to the metal cap member 23, the water saving effect can be achieved without changing the feeling of use of water (level of discharge of water from the faucet) with respect to the air-mixed water flow, even with a small amount of water.

Further, the adapter 12 illustrated above can be mounted to and removed from an existing faucet through screwing, without using any tool, by devising the shape of the mounting member 20.

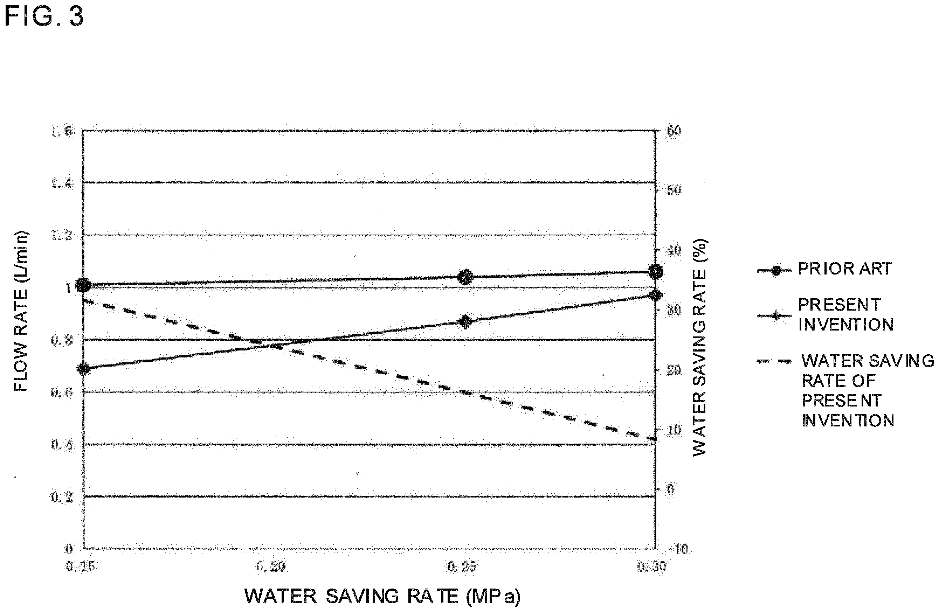

FIG. 3 is a graph illustrating a water saving effect by using the faucet 10 according to the present invention.

As illustrated in FIG. 3 showing a graph where a horizontal axis represents water pressure (MPa) and a vertical axis represents flow rate (L/min), in a case where the faucet according to the present invention denoted by black squares (■) is used, compared to the prior-art type faucet denoted by black circles (●), a flow rate as small as approximately 0.69 L/min is realized in a case where the water pressure is 0.15 MPa, and a flow rate as small as approximately 0.87 L/min is realized in a case where the water pressure is 0.25 MPa, so that a water saving effect of 8 to 32 % can be achieved within such water pressure range.

The use of such faucet realizes sufficient water saving effect while discharging water with necessary water pressure, even if the flow rate is within a small range as in the case of water supplied on an aircraft.

FIG. 4 is a front view illustrating a specific example of a case where the faucet 10 according to the present invention is applied to a lavatory unit for an aircraft.

As illustrated in FIG. 4, an aircraft lavatory unit 30 has a toilet unit 31, a washbasin unit 32 and a mirror 33 provided within a lavatory space surrounded by a plurality of panels.

The faucet 10 according to the present invention is provided above the washbasin unit 32, and an amenity storage unit storing amenities such as various expendables is formed in an inner portion of the washbasin unit 32.

Since the faucet 10 according to the present invention adopts a simple configuration of merely mounting the adapter 12 to the discharge portion of the body portion 11, as illustrated in FIG. 1, the adapter 12 can easily be mounted to, or replaced with, the discharge portion of an existing faucet.

Further, since multiple lavatory units are provided in an aircraft, the total amount of water (tank capacity) loaded in the aircraft can be reduced, so that as a result, the weight of the aircraft body during flight as a passenger aircraft can be reduced, which leads to improving fuel efficiency, and enabling to increase the number of passenger seats or increasing the load.

The embodiment of FIG. 4 illustrates an example where the water supply system including the faucet 10 according to the present invention is applied to a lavatory unit of an aircraft, but the faucet according to the present invention can also be applied, for example, to a water supply system or the like of a sink provided within a galley of an aircraft for serving meals.

### [Reference Signs List]

10 Faucet
11 Body portion
12 Adapter
20 Mounting member
20a Negative pressure forming chamber
20b Air passage hole
21 Orifice
22 Adapter body portion
23 Metal cap member
24 Dispersion member
30 Lavatory unit

## Claims

1. A faucet (10) for a water supply system for an aircraft comprising a body portion (11) having a water passage formed therein, and an adapter (12) removably mounted to a discharge portion of the body portion (11),
the adapter (12) comprising a mounting member (20) and an adapter body portion (22) which are screw-engaged to form a casing ;
the mounting member (20) comprising an orifice (21), a negative pressure forming chamber (20a) through which water having passed through the orifice (21) flows, and an air passage hole (20b) in fluid communication with the negative pressure forming chamber (20a) and an exterior of the adapter (12) for taking in mixing air; and the adapter (12) further comprising a dispersion member (24) arranged within the casing and downstream of the negative pressure forming chamber (20a) and configured to diverge the water having passed through the negative pressure forming chamber (20a) and then mix the water again, wherein said air passage hole (20b) radially extends from said negative pressure forming chamber (20a) to a screw-engaged portion between said mounting member (20) and an adapter body portion (22) and communicates with the exterior of said adapter body portion (22) through a partially cut-out clearance formed at said screw-engaged portion.

2. The faucet (10) for a water supply system for an aircraft according to claim 1,
wherein the adapter (12) further comprises a metal cap member (23) having a plurality of holes on a side of the casing opposite from a side mounted to the body portion (11).

3. The faucet (10) for a water supply system for an aircraft according to claim 1 or claim 2,
wherein the adapter (12) further comprises a strainer on a side of the casing mounted to the body portion (11).

4. A lavatory unit (30) for an aircraft comprising the faucet (10) for a water supply system for an aircraft according to any one of claims 1 through 3.

5. A galley unit for an aircraft comprising the faucet (10) for a water supply system for an aircraft according to any one of claims 1through 3.

## Patentansprüche

1. Hahn (10) für ein Wasserversorgungssystem für ein Flugzeug, umfassend einen Körperteil (11) mit einem darin ausgebildeten Wasserdurchgang und einen Adapter (12), der lösbar an einem Abführteil des Körperteils (11) befestigt ist,
wobei der Adapter (12) ein Befestigungsglied (20) und einen Adapterkörperteil (22) umfasst, die zur Bildung eines Gehäuses in Schraubeingriff stehen;
wobei das Befestigungsglied (20) eine Öffnung (21), eine Unterdruckbildungskammer (20a), durch die durch die Öffnung (21) passiertes Wasser strömt, und ein Luftdurchgangsloch (20b), das mit der Unterdruckbildungskammer (20a) und einem Äußeren des Adapters (12) in fluidischer Verbindung steht, um Mischluft aufzunehmen, umfasst; und
wobei der Adapter (12) ferner ein Verteilungsglied (24) umfasst, das in dem Gehäuse und stromabwärts der Unterdruckbildungskammer (20a) angeordnet ist und dazu konfiguriert, das durch die Unterdruckbildungskammer (20a) passierte Wasser zu verteilen und dann das Wasser wieder zu mischen,
wobei sich das Luftdurchgangsloch (20b) von der Unterdruckbildungskammer (20a) zu einem Schraubeingriffsteil zwischen dem Befestigungsglied (20) und einem Adapterkörperteil (22) erstreckt und durch einen teilweise ausgeschnittenen Freiraum, der am Schraubeingriffsteil ausgebildet ist, mit dem Äußeren des Adapterkörperteils (22) in Verbindung steht.

2. Hahn (10) für ein Wasserversorgungssystem für ein Flugzeug nach Anspruch 1,
wobei der Adapter (12) ferner ein Metallkappenglied (23) mit mehreren Löchern auf einer Seite des Gehäuses gegenüber einer am Körperteil (11) befestigten Seite umfasst.

3. Hahn (10) für ein Wasserversorgungssystem für ein Flugzeug nach Anspruch 1 oder Anspruch 2,
wobei der Adapter (12) ferner ein Filtersieb auf einer am Körperteil (11) befestigten Seite des Gehäuses umfasst.

4. Sanitäreinheit (30) für ein Flugzeug, die einen Hahn (10) für ein Wasserversorgungssystem für ein Flugzeug nach einem der Ansprüche 1 bis 3 umfasst.

5. Bordkücheneinheit für ein Flugzeug, die einen Hahn (10) für ein Wasserversorgungssystem für ein Flugzeug nach einem der Ansprüche 1 bis 3 umfasst.

## Revendications

1. Robinet (10) pour un système d'alimentation en eau d'un aéronef, comprenant une partie de corps (11) présentant un passage d'eau formé dans celle-ci, et un adaptateur (12) monté de façon amovible sur une partie de décharge de la partie de corps (11),
l'adaptateur (12) comprenant un élément de montage (20) et une partie de corps d'adaptateur (22) qui sont engagés par vissage pour former une enceinte;
l'élément de montage (20) comportant un orifice (21), une chambre de formation de pression négative (20a) à travers laquelle l'eau passée à travers l'orifice (21) s'écoule, et un trou de passage d'air (20b) en communication fluidique avec la chambre de formation de pression négative (20a) et avec l'extérieur de l'adaptateur (12) pour aspirer de l'air mélangé; et
l'adaptateur (12) comprenant en outre un élément de dispersion (24) agencé à l'intérieur de l'enceinte et en aval de la chambre de formation de pression négative (20a) et configuré de manière à dévier l'eau passée à travers la chambre de formation de pression négative (20a) et à mélanger ensuite l'eau à nouveau,
dans lequel ledit trou de passage d'air (20b) s'étend radialement à partir de ladite chambre de formation de pression négative (20a) jusqu'à une partie engagée par vissage entre ledit élément de montage (20) et une partie de corps d'adaptateur (22) et communique avec l'extérieur de ladite partie de corps d'adaptateur (22) à travers un dégagement partiellement découpé formé au niveau de ladite partie engagée par vissage.

2. Robinet (10) pour un système d'alimentation en eau d'un aéronef selon la revendication 1, dans lequel l'adaptateur (12) comprend en outre un élément de coiffe métallique (23) comportant une pluralité de trous sur un côté de l'enceinte opposé à un côté monté sur la partie de corps (11).

3. Robinet (10) pour un système d'alimentation en eau d'un aéronef selon la revendication 1 ou la revendication 2,
dans lequel l'adaptateur (12) comprend en outre une crépine sur un côté de l'enceinte monté sur la partie de corps (11).

4. Unité de toilette (30) pour un aéronef comprenant le robinet (10) pour un système d'alimentation en eau d'un aéronef selon l'une quelconque des revendications 1 à 3.

5. Unité de cuisine pour un aéronef comprenant le robinet (10) pour un système d'alimentation en eau d'un aéronef selon l'une quelconque des revendications 1 à 3.
